(19)

Europäisches
Patentamt
European
Patent Office
Office européen
des brevets

(11)     **EP 2 364 607 B1**

(12)     **EUROPEAN PATENT SPECIFICATION**

(45) Date of publication and mention
of the grant of the patent:
**19.09.2012   Bulletin 2012/38**

(51) Int Cl.:
***A41H 43/04*** *(2006.01)*     ***B29C 65/04*** *(2006.01)*

(21) Application number: **11156959.6**

(22) Date of filing: **04.03.2011**

(54) **High frequency sewing machine**

Hochfrequenznähmaschine

Machine à coudre haute fréquence

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.03.2010   JP 2010073552**

(43) Date of publication of application:
**14.09.2011   Bulletin 2011/37**

(73) Proprietor: **Yamato Sewing Machine Seizo Co.,
Ltd.
Osaka-shi,
Osaka 530-0047 (JP)**

(72) Inventors:
• **Nakata, Norio
Toyonaka-shi
Osaka 560-0034 (JP)**
• **Okamoto, Masaki
Toyonaka-shi
Osaka 560-0034 (JP)**

• **Kurata, Hiromichi
Toyonaka-shi
Osaka 560-0034 (JP)**
• **Yamamoto, Yasuji
Osaka-shi
Osaka 543-0002 (JP)**
• **Kawata, Nobuyuki
Osaka-shi
Osaka 543-0002 (JP)**
• **Tsuji, Akiyoshi
Osaka-shi
Osaka 543-0002 (JP)**

(74) Representative: **HOFFMANN EITLE
Patent- und Rechtsanwälte
Arabellastrasse 4
81925 München (DE)**

(56) References cited:
**EP-A1- 0 308 167     EP-A2- 2 281 472
FR-A5- 2 084 440     GB-A- 601 256
JP-A- 6 155 576     JP-A- 2006 130 802**

**Description**

BACKGROUND OF THE INVENTION

Field of the Invention

The present invention relates to a high frequency sewing machine used for producing and handling apparel products (textile products) such as women's clothing, children's clothing and men's clothing in which clothes of natural fibers represented by cotton, wool, silk, or the like, or synthetic fibers represented by polyester, nylon, acryl, or the like (hereinafter referred to as "fiber clothes" in the present invention) are used as object materials, and overlapped portions such as the overlapped ends of these fiber clothes are bonded (welded) together through a thermoplastic resin tape melted under high frequency dielectric heating.

As this type of high frequency sewing machine, a large number of ones have been developed and have come in practice in which a workpiece itself is for example a thermoplastic synthetic resin sheet such as of vinyl chloride resin or a synthetic resin film, and the overlapped portions of the workpiece are welded. These high frequency sewing machines are required to merely include a transfer means for transferring the resin sheet or the resin film as a workpiece, along the longitudinal direction of the overlapped portions; and a pair of electrodes for applying high frequency power to the overlapped portions of the resin sheet or the resin film transferred by the transfer means. Compared to general sewing machines which sew together the fiber clothes by forming seams by lacing or looping sewing threads such as a needle thread (upper thread), a looper thread, a lower thread, it is possible to omit a plurality of complicated mechanisms and parts for constituting the sewing construction, for example, the constructions required in these sewing machines, such as feed dogs for transferring a fiber cloth in the sewing advance direction, a needle and a needle vertical reciprocating movement mechanism for causing the thread to pass through the fiber cloth, a rotary hook for applying the lower thread and a hook operating mechanism for lacing and looping, or a looper and a looper operating mechanism for applying the looper thread. That is, the whole structure of the sewing machine can be simplified.

Description of Related Art

In the existing high frequency sewing machines having a simpler construction than the general sewing machines, a means for bonding the overlapped portions of a workpiece (a thermoplastic resin sheet or a resin film) in which the workpiece itself is melted under high frequency dielectric heating by applying high frequency power between a pair of upper and lower electrode rollers, while continuously transferring the workpiece held between the pair of electrode rollers in a certain direction, has heretofore been employed as disclosed in Japanese Unexamined Patent Application Publications Nos. 6-218819 and 6-155576.

As disclosed in Japanese Patent No. 4022539, the high frequency sewing machine has also been proposed in which a pair of upper and lower electrode rollers for transferring a workpiece in a certain direction while holding it therebetween, are intermittently rotated by interlockingly connecting these rollers to a drive motor through a movement conversion mechanism including a one-way transmission clutch.

In each of these conventional high frequency sewing machines disclosed in the publications Nos. 6-218819 and 6-155576 and the patent No. 4022539, the contact portions of the pair of electrode rollers make a line contact limited to the roller width (point contact when viewed in the transfer direction of the workpiece). To ensure bonding strength even under the line contact or the point contact, it is necessary to take either one of the means for setting the applied high frequency power to a high value, and the means for decreasing the transfer speed of the workpiece.

In the means for enhancing the value of high frequency power, the heat of the enhanced high frequency power is concentratedly exerted on the line or point contact portions, so that the workpiece is susceptible to insulation breakdown, causing defective portions such as burn and burn holes (scorches). Particularly, when the workpiece is a thin fiber cloth that is the object material of the present invention, there is the problem that the burn range tends to momentarily expand, resulting in a large number of defective products.

In the means for decreasing the transfer speed of the pair of electrode rollers by setting a low value of high frequency power, there is the problem that handling efficiency is extremely deteriorated. These problems due to the line or point contact occur similarly even with the construction where the pair of electrode rollers are intermittently rotated, as disclosed in the patent No. 4022539. Consequently, the occurrence of defective products and the deterioration of handling efficiency are unavoidable.

In producing and handling apparel products using the fiber clothes as the object material, it is often required to bond curvilinear portions as in the case of women's underwear or the like. Also, stretchable fiber clothes are often used. The sewing machines for producing and handling the apparel products are required to bond together the curvilinear portions and the stretchable fiber clothes.

However, in the conventional high frequency sewing machines adapted to linearly transfer a workpiece in a certain direction while holding the workpiece between the pair of electrode rollers, the bonding of the curvilinear portions, and the bonding of the stretchable fiber clothes are poorly handled. That is, the conventional high frequency sewing machines using the pair of electrode rollers are suitable for bonding the overlapped portions while linearly transferring unstretchable workpiece such as resin sheets, whereas they are unsuitable for producing and handling the apparel products in which the fiber clothes are used as the object materials, and the bonding of curvilinear portions is frequently handled, and the stretchable materials are often used. Hence, it seems to be substantially impossible that the conventional high frequency sewing machines are used directly for bonding together the fiber clothes.

## SUMMARY OF THE INVENTION

The present invention aims to solve the above problems by providing a high frequency sewing machine which ensures uniform bonding strength by using high frequency power, while preventing producing and handling defective products having a burn, burn hole, or the like, and which also highly efficiently and satisfactorily bonding together curvilinear portions or stretchable fiber clothes.

According to an aspect of the present invention, a high frequency sewing machine includes: a workpiece mounting plate slidingly movably mounting a workpiece with a thermoplastic resin tape held between overlapped portions of a fiber cloth; an intermittent transfer device which is disposed below the workpiece mounting plate, and intermittently transfers the workpiece mounted on the workpiece mounting plate in a specific direction along a horizontal surface by a combination of horizontal movement and vertical movement; a presser foot which cooperates with the intermittent transfer device to transfer the workpiece in the specific direction, and presses the workpiece so as to prevent a rise thereof; and an upper planar electrode disposed above the workpiece mounting plate, and a lower planar electrode disposed below the workpiece mounting plate and disposed flush with the upper surface of the workpiece mounting plate. The overlapped portions of the fiber cloth are continuously bonded together by allowing the thermoplastic resin tape to melt under high frequency dielectric heating by applying high frequency power between the pair of upper and lower planar electrodes. The high frequency sewing machine is characterized by a transfer sensor to detect whether a workpiece is transferred or not by the intermittent transfer device; and a high frequency power controller. The high frequency power controller automatically controls a high frequency power value applied between the pair of planar electrodes, depending on whether the workpiece is transferred or not by the intermittent transfer device. As the result, high frequency power having a predetermined value is applied between the pair of planar electrodes when the transfer sensor detects that the workpiece is not transferred, whereas high frequency power having a value smaller than while the workpiece is not transferred, is applied therebetween when the transfer sensor detects that the workpiece is transferred.

In the high frequency sewing machine thus constructed, while intermittently transferring the workpiece including the fiber cloth along the horizontal surface by the cooperation between the intermittent transfer device and the presser foot which are installed in a general sewing machine, the heat of the high frequency power applied between the pair of upper and lower planar electrodes while the workpiece is not transferred, is transmitted to the thermoplastic resin tape held between the overlapped portions of the fiber cloth. Therefore, the overlapped portions of the fiber cloth can be sequentially bonded by allowing the resin tape to melt in a planar shape, namely, for each certain area. Also, the same portion can be repetitively bonded together. Thus, the assured uniform bonding strength is achieved by repetitive bonding under relatively low high-frequency power, and the heat obtained from the high frequency power can be distributed into the surface contact portions of the pair of electrodes without being concentrated in linear or point contact portions. It is therefore capable of avoiding the occurrence of defective portions such as burn or burn holes (scorches) of the fiber cloth due to the concentration of the heat of the high frequency power into a minute area. In addition to the assured uniform bonding strength as described above, satisfactorily finished apparel products can be surely produced and handled even when the object material is a fiber cloth that is weak against heat.

Additionally, the transfer means of the workpiece is achieved by the cooperation between the intermittent transfer device alternately repeating a mode in which the intermittent transfer device abuts against the lower surface of the workpiece mounted on the workpiece mounting plate, and transfers the workpiece along the horizontal surface in a specific progression direction, and the mode in which the intermittent transfer device separates from the lower surface of the workpiece, and stops the transfer of the workpiece; and the presser foot which presses the workpiece against the workpiece mounting plate so as to prevent a rise thereof while the intermittent transfer device transfers the workpiece. It is therefore capable of optionally changing the direction of the workpiece against the pressing force of the presser foot while the workpiece is not transferred. It is also easy to perform any optional curvilinear transfer besides linear transfer. Even when handling a stretchable fiber cloth, the fiber cloth can be transferred as it is, without exerting excess clamping force thereon. That is, the bonding of curvilinear portions and the bonding of stretchable fiber clothes can be sufficiently handled. Accordingly, this high frequency sewing machine is extremely suitable and practical for producing and handling the apparel products that include many curvilinear portions, and frequently use the stretchable fiber cloth.

Further, when the transfer sensor detects that the workpiece is transferred, it is controlled so as to apply, to the pair of electrodes, the high frequency power whose value is smaller than the value of the high frequency power applied between the electrodes while the workpiece is not transferred, namely, the high frequency power value allowing the overlapped portions of the fiber cloth to be bonded together under dielectric heating. Therefore, upon the transition from the time while the workpiece is not transferred to the time while the workpiece is transferred, small high frequency power is applied between the pair of electrodes, thereby sufficiently preventing spark from occurring between the pair of electrodes, thus causing defective portions where the fiber cloth has a burn or burn hole. Even while the workpiece is transferred, it is adapted to continuously apply therebetween smaller high frequency power than while the workpiece, is not transferred, thereby increasing the first temperature rise rate owing to the dielectric heating of the pair of electrodes, immediately after the transition from the time while the workpiece is transferred to the time while the workpiece is not transferred. This allows an operator to freely and safely decrease the transfer speed during bonding of curvilinear portions or the like, thereby considerably facilitating the operation therefor . Additionally, even when the transfer speed of the workpiece is increased during bonding of linear portions, the overlapped portions of the fiber cloth can be surely and firmly bonded together by quickly heating and melting the resin tape. This improves bonding efficiently without causing deterioration in yield.

In the high frequency sewing machine according to the present invention, the high frequency power controller may control so that the high frequency power applied to the pair of planar electrodes while the workpiece is transferred, is changed to zero.

Preferably, the intermittent transfer device is comprised of feed dogs disposed in slot-like elongated holes formed in the workpiece mounting plate; and a feed dog drive mechanism that allows the feed dogs to produce synthetic circulation movements in vertical and horizontal directions within the slot-like elongated holes.

In this case, it is possible to directly and effectively utilize the producing technique and assembly technique already established for a well-known intermittent transfer device comprised of feed dogs and a feed dog drive mechanism, which are included in a conventionally known general sewing machine. This minimizes burdens on design and production, such as development and manufacturing of a special intermittent transfer device intended for the high frequency sewing machine, as well as considerable changes of the sewing machine bed section in the general sewing machine in order to incorporate the special intermittent transfer device. As the result, the productivity of the high frequency sewing machine as a whole is improved, and the manufacturing costs thereof are reduced. The resulting high frequency sewing machine also has high performance and high quality.

Preferably, the presser foot also serves as the upper planar electrode in the pair of upper and lower planar electrodes.

In this case, the presser foot performing the intermittent transfer of the workpiece in cooperation with the intermittent transfer device can also serve as the upper planar electrode, thereby eliminating the need to install the upper electrode independently from the presser foot. This reduces the number of components, and requires no special devices for separately arranging and fixing the upper electrode at the location of the presser foot, and for insulating the presser foot, thereby achieving a further simplified entire structure and further cost reduction.

Preferably, the workpiece mounting plate, and a part of the intermittent transfer device which abuts against the lower surface of the workpiece are made of a material having electrical insulating properties and heat resistance, such as engineering plastics.

This ensures sufficient structural strength of the workpiece mounting plate, and the part of the intermittent transfer device which abuts against the lower surface of the workpiece. This also imparts excellent wear resistance, corrosion resistance, electrical insulating properties, and heat resistance, thereby improving the durability of the individual components used under circumstances where the high frequency power is applied.

Preferably, preheating heaters are annexed to the pair of upper and lower planar electrodes, respectively.

In this case, the upper and lower electrodes can be retained at a predetermined temperature by preheating them while the workpiece is not transferred by the intermittent transfer device. Therefore, the resin tape can be surely melted to stably obtain predetermined bonding strength, while more surely preventing the occurrence of spark by setting high frequency power applied to these two electrodes as low as possible.

In the high frequency sewing machine in which the presser foot serves as the upper planar electrode, a heat conductive member is preferably interposed between the presser foot also serving as the upper planar electrode, and a heater retainer which retains the preheating heater for preheating the presser foot, and is fixedly attached to a sewing machine body, and the heat conductive member connects the presser foot and the heat retainer so as to permit relative vertical sliding movement.

In this case, the weight increase of the presser foot (the upper electrode) is minimized to achieve a smooth transfer of the workpiece and facilitate the operation for curvilinear transfer. Additionally, the heat of the preheating heaters can be efficiently transmitted to the presser foot through the heat conductive member. The effect of preheating these two electrodes prevents the occurrence of spark, and ensures stable bonding strength.

Preferably, the high frequency sewing machine further includes a speed sensor to detect a transfer speed of the workpiece by the intermittent transfer device, and the high frequency power controller executes control so that the value of high frequency power applied while the workpiece is not transferred, is increased as a workpiece transfer speed detected by the speed sensor becomes higher.

In this case, by controlling so that the value of high frequency power applied while the workpiece is not transferred increases as the transfer speed increases, the temperature rising rate of the electrodes under dielectric heating can be roughly proportional to the workpiece transfer speed. This prevents insufficient bonding or poor bonding, thereby improving bonding efficiency.

Preferably, the high frequency sewing machine further includes a speed sensor to detect a transfer speed of the workpiece by the intermittent transfer device, and the high frequency power controller executes control so as to apply, for a certain time, high frequency power having a certain value at which the overlapped portions of the fiber cloth are bonded together at a maximum transfer speed while the workpiece is not transferred, irrespective of a transfer speed detected by the speed sensor.

In this case, by applying for the certain time the high frequency power having the certain value while the workpiece is not transferred, predetermined bonding can be ensured irrespective of transfer speed variations, and it is easy to adjust the high frequency power correspondingly with the type and heat resistance of the fiber cloth.

Preferably, the transfer sensor and the speed sensor are replaced with a rotation phase sensor which is attached to a sewing machine spindle and detects a rotation phase of intermittent transfer of a workpiece by the intermittent transfer device.

In this case, the function of the transfer sensor and the function of the speed sensor can be achieved only by attaching the rotation phase sensor to the sewing machine spindle. This simplifies the structure and reduces costs than the case of separately installing the transfer sensor and the speed sensor. This also eliminates a detection time difference between these two sensors, thereby accurately and suitably adjusting high frequency power based on the detection results of these two sensors.

Preferably, the high frequency sewing machine further includes a workpiece sensor to detect the presence or absence of a workpiece mounted on the intermittent transfer device, and the high frequency power controller executes control while the presence of the workpiece is detected by the workpiece sensor, whereas it executes no control while the absence of the workpiece is detected by the workpiece sensor.

In this case, it is capable of preventing the disadvantage that high frequency power is erroneously applied in the absence of the workpiece on the feed dogs, and preventing the occurrence of poor product.

These and other characteristic features of the present invention and the effects thereof will become apparent from the following description of embodiments.

## BRIEF DESCRIPTION OF THE DRAWINGS

Fig. 1 is an exterior perspective view with parts broken away of the entire high frequency sewing machine according to the present invention;
Fig. 2 is an enlarged perspective view of important parts of the high frequency sewing machine;
Fig. 3 is an enlarged longitudinal sectional view of the important parts of the high frequency sewing machine;
Fig. 4 is an exploded perspective view showing the construction of feed dogs in the high frequency sewing machine;
Fig. 5 is an exploded perspective view to explain the attached state of an upper planar electrode in the high frequency sewing machine;
Fig. 6 is an exploded perspective view to explain the attached state of a lower planar electrode in the high frequency sewing machine;
Fig. 7 is a block diagram showing the configuration of a control system in the high frequency sewing machine;
Fig. 8 is a timing chart showing an example of control operations in the high frequency sewing machine;
Fig. 9 is a flow chart to explain the control operations in the high frequency sewing machine; and
Fig. 10 is a timing chart showing other example of the control operations in the high frequency sewing machine.

## DESCRIPTION OF PREFERRED EMBODIMENTS

An exemplary embodiment of the present invention is described below with reference to the accompanying drawings.

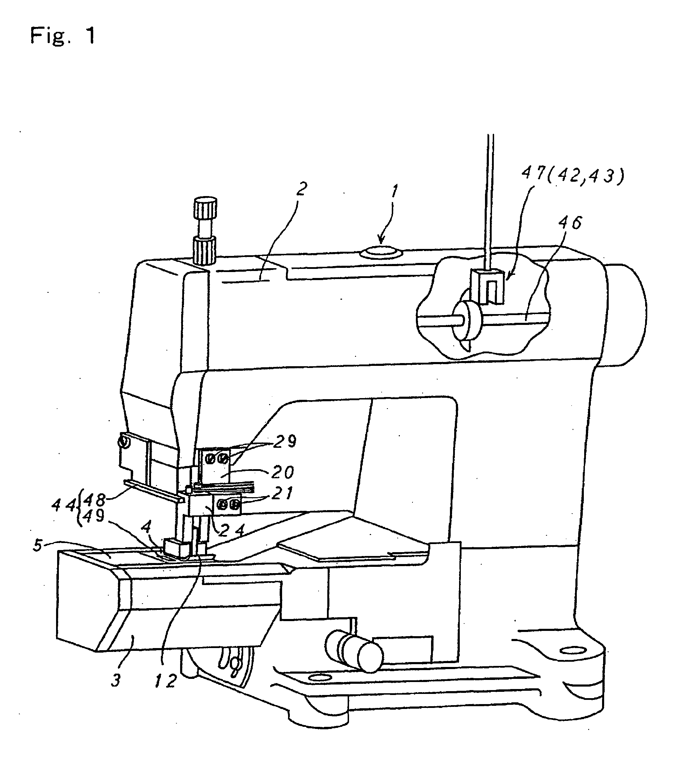

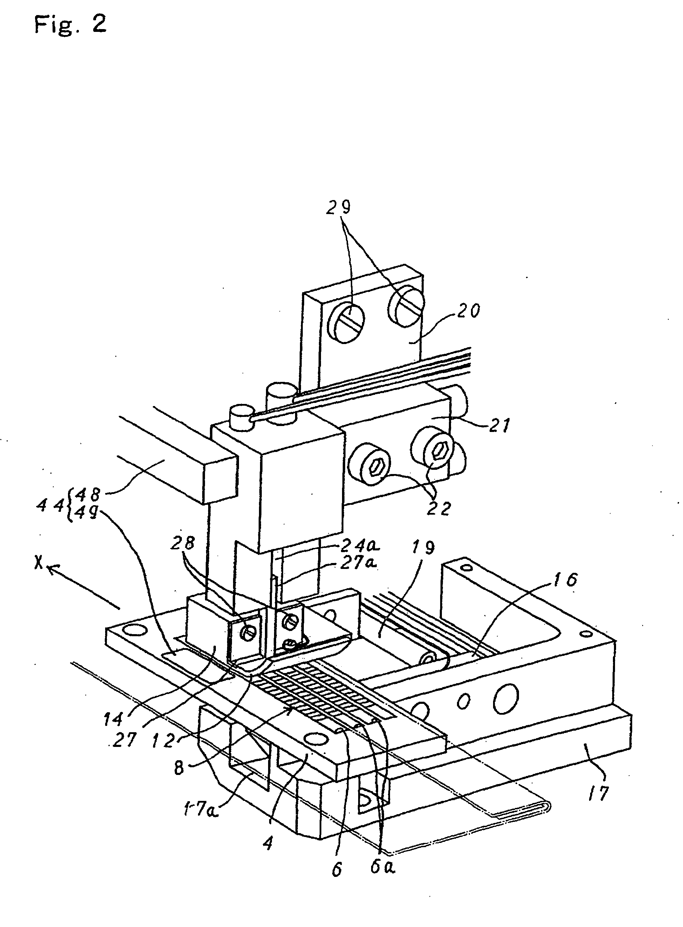

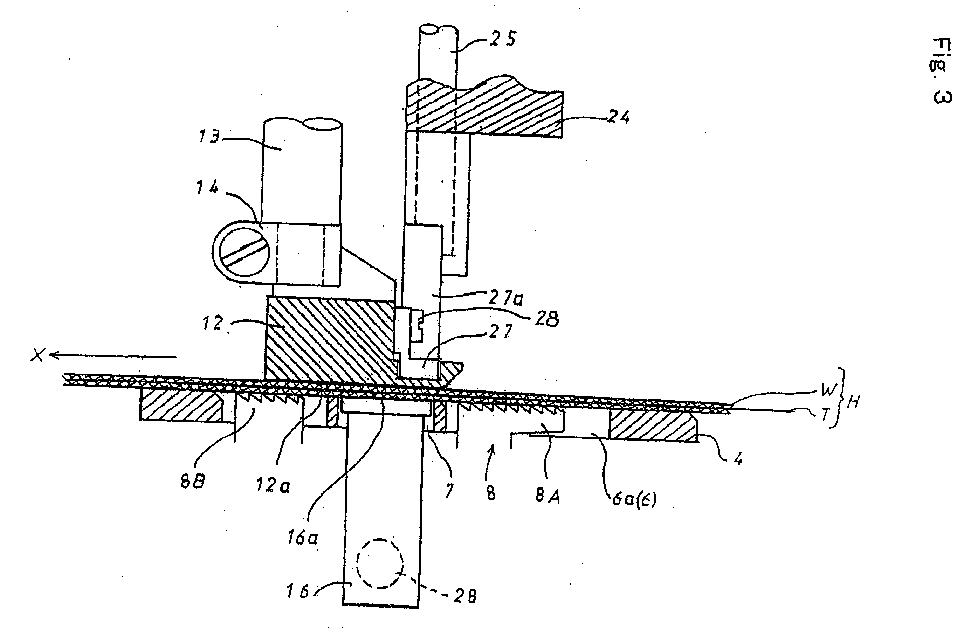

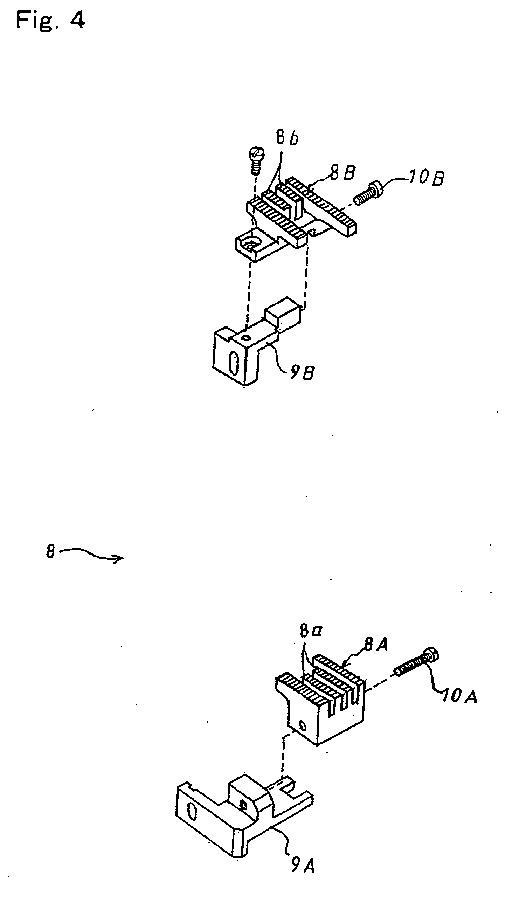

Fig. 1 is the exterior perspective view with parts broken away of the entire high frequency sewing machine according to the present invention. Fig. 2 is the enlarged perspective view of the important parts in the high frequency sewing machine. Fig. 3 is the enlarged longitudinal sectional view of the important parts in the high frequency sewing machine. Fig. 4 is the exploded perspective view showing the construction of the feed dogs in the high frequency sewing machine.

In Figs. 1 to 3, a sewing machine body includes a sewing machine arm section 2 and a sewing machine bed section 3.

A workpiece mounting plate (corresponding to a needle plate in a general sewing machine) 4 for slidably and movably mounting a workpiece H including a fiber cloth W, and a sliding plate 5 are attached to an upper wall of the bed section 3. The upper surfaces of the workpiece mounting plate 4 and the sliding plate 5 are substantially flush with the upper surface of the bed section 3.

The workpiece mounting plate 4 is made of engineering plastics which is a structural material, such as polyamide, polyacetal, ABS, or polycarbonate, and has wear resistance, corrosion resistance, electrical insulating properties, and heat resistance.

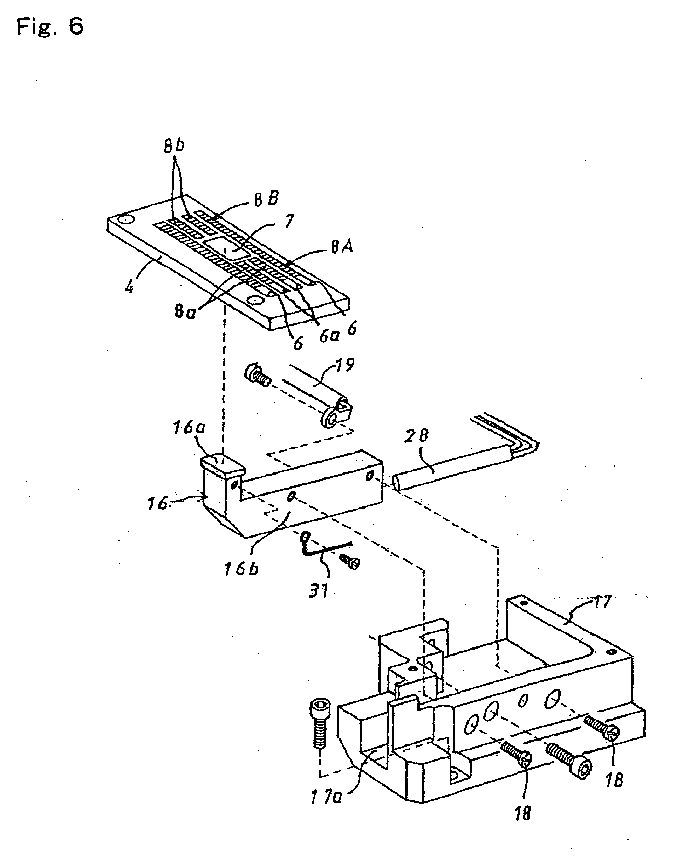

As shown in Figs. 2 and 6, four rows of slot-like elongated holes parallel to one another are penetratedly formed in the workpiece mounting plate 4. Among these four rows of slot-like elongated holes 6, two rows of slot-like elongated holes 6a which are located at the widthwise mid portions of the workpiece mounting plate 4 are divided at their respective longitudinal mid positions into two front and rear stages in a progression direction X, with an installation hole 7 of a later-described lower planar plus electrode 16 interposed therebetween. Feed dogs 8 (corresponding to an intermittent transfer device) are disposed in these four rows of elongated holes 6. These feed dogs 8 intermittently transfer the workpiece H mounted on the workpiece mounting plate 4 along a horizontal plane in a specific direction, namely, the progression direction X, by a combination of horizontal movement and vertical movement (synthetic movement)

As a material constituting the workpiece mounting plate 4, it is preferable to use super engineering plastics composed of polyether ether ketone resin. In this case, the heat resistance and wear resistance of the workpiece mounting plate 4 are further improved.

As shown in Fig. 4, these feed dogs 8 include a front feed dog 8A including short feed dogs 8a moving within the front elongated hole portions of the slot-like elongated holes 6a divided into the two front and rear stages, and a rear feed dog 8B including short feed dogs 8b moving within the rear elongated hole portions of the slot-like elongated holes 6a. These front feed dog 8A and the rear feed dog 8B are made of engineering plastics which is a structural material, such as polyamide, polyacetal, ABS, or polycarbonate, and has wear resistance, corrosion resistance, electrical insulating properties, and heat resistance. These front feed dog 8A and the rear feed dog 8B are respectively fixed through set screws 10A and 10B to a front feed dog mounting base 9A and a rear feed dog mounting base 9B disposed within the bed section 3 below the workpiece mounting plate 4.

As a material constituting the front feed dog 8A and the rear feed dog 8B, like the workpiece mounting plate 4, it is preferable to use super engineering plastics composed of polyether ether ketone resin. In this case, the heat resistance and wear resistance of the front feed dog 8A and the rear feed dog 8B are further improved.

The front feed dog mounting base 9A and the rear fed dog mounting base 9B are interlockingly connected to a drive mechanism incorporated into the bed section 3 so that the front feed dog 8A and the rear feed dog 8B repeat the synthetic movements. The feed dog drive mechanism has the same construction as that employed in the general sewing machine, which is well known. Therefore, the detailed description thereof is omitted here.

The feed dogs 8 (the front feed dog 8A and the rear feed dog 8B) and the feed dog drive mechanism constitute the intermittent transfer device alternately repeating the mode of transferring the workpiece H in the progression direction X, and the mode of not transferring the workpiece H.

A presser foot 12 is disposed at a location that is above the workpiece mounting plate 4, and is opposed to the front feed dog 8A and the rear feed dog 8B of the feed dogs 8. The presser foot 12 cooperates with these feed dogs 8 (the front and rear feed dogs 8A and 8B) to transfer the workpiece H in the progression direction X, and also presses the workpiece H against the feed dogs 8 so that the workpiece H does not rise. The presser foot 12 is fixed through a fitting attachment 14 to a lower end of a pressure rod 13 supported at the distal end of arm section 2 so that the pressure rod 13 can reciprocatively move up and down. The pressure rod 13 is movable up and down through the drive mechanism incorporated into the arm section 2. That is, the pressure rod 13 moves up and releases the pressure against the workpiece H while the workpiece H is transferred by the feed dogs 8, whereas it moves down to allow the presser foot 12 to resiliently press the workpiece H while the workpiece is not transferred.

The drive mechanism for moving up and down the pressure rod 13 is identical to that employed in the general sewing machine, which is well known. Therefore, the detailed description thereof is omitted here.

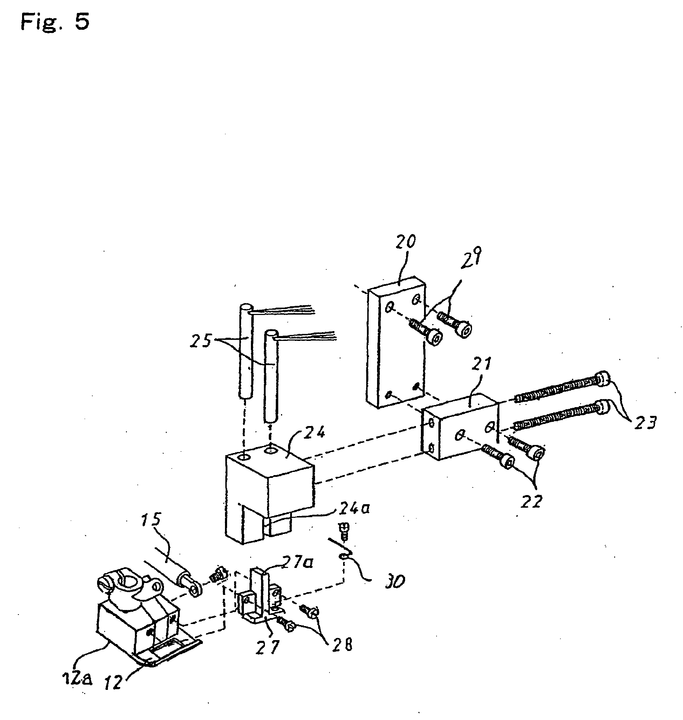

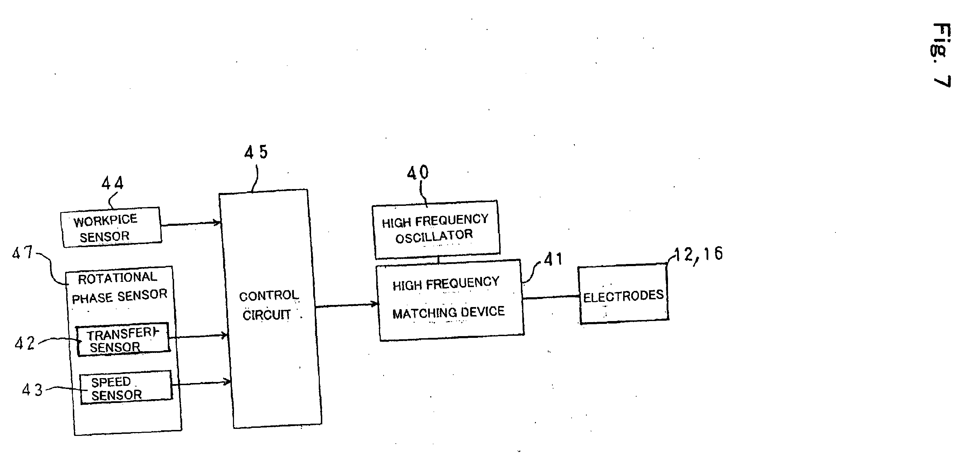

A hold-down surface 12a of the presser foot 12 has at least a width equal to or more than a transfer width of the feed dogs 8. As shown in Fig. 5, a minus electrode line 15 led out of a high frequency matching device 41 (refer to Fig. 7) is connected to a side surface of the presser foot 12. Thus, the presser foot 12 also serves as the upper planar minus electrode of the pair of electrodes to which high frequency power is applied from a high frequency oscillator 40 through the high frequency matching device 41 (refer to Fig. 7).

According to the foregoing construction, the upper planar minus electrode, that is, the presser foot 12, is moved up away from the lower planar plus electrode described later while the workpiece H is transferred by the feed dogs 8, whereas it is moved down to approach the lower planar plus electrode while the workpiece H is not transferred by the feed dogs 8.

An upward open electrode mount 17 is fixed within the bed section 3 below the workpiece mounting plate 4, as shown in Figs. 2 and 6. A recessed groove 17a is formed in an upper surface portion of the electrode mount 17. The lower planar plus electrode 16, whose side surface is connected to a plus electrode line 19 led out of the high frequency matching device 41, is fit into the recessed groove 17a, and is also fixed to the electrode mount 17 through a set screw 18. In the lower planar plus electrode 16, an electrode surface 16a. having a certain area faces the installation hole 7 formed in the workpiece mounting plate 4, and is arranged flush with the upper surface of the workpiece mounting plate 4.

As shown in Figs. 2 and 5, an insulating block 21 made of engineering plastics is fixed through a set screw 22 to amounting base 20 fixed to the arm section 2 through a set screw 29. A preheating cartridge heater 25 is insertedly retained in a cartridge heater retainer 24 fixed to the insulating block 22 through a set screw 23.

A forked vertical sliding groove 24a is formed in a lower part of the preheating cartridge heater retainer 24. On the other hand, a heat conductive member 27 having an engaging piece 27a engageable into the vertical sliding groove 24a is fixed through a set screw 28 to the front face of the upper surface of the upper planar minus electrode 12, that is, the presser foot, in the progression direction X. By engaging the engaging piece 27a of the heat conductive member 27 into the vertical sliding groove 24a of the preheating cartridge heater retainer 24 so as to permit relative vertical sliding movement, the preheating (heating) caloric value generated by the preheating cartridge heater 25 is normally transmitted to the planar minus electrode 12 through the heat conductive member 27 so that the minus electrode 12 can be held at high temperatures.

Additionally, as shown in Fig. 6, a preheating cartridge heater 28 is insertedly retained in a horizontal basal end 16b of the lower planar plus electrode 16 fixed to the electrode mount 17. Thus, the preheating (heating) caloric value generated by the preheating cartridge heater 28 is normally transmitted to the planar plus electrode 16 so that the plus electrode 16 can be held at high temperatures.

In order to perform feedback control so that the preheating temperatures of the upper planar minus electrode 12 and the lower planar plus electrode 16 can be held constant, heat (temperature) sensors 30 and 31 are attached to a side surface of the preheating cartridge heater retainer 24 and a side surface of the lower planar plus electrode 16, respectively.

In addition to the foregoing component elements, the high frequency sewing machine of the present invention employs the construction as shown in Fig. 7, as a functional construction to control high frequency power output applied between the pair of planar electrodes 12 and 16 from the high frequency oscillator 40.

The construction shown in Fig. 7 includes a transfer sensor 42 to detect whether the workpiece H is transferred or not by the feed dogs 8, a speed sensor 43 to detect a transfer speed of the workpiece H transferred by the feed dogs 8, a workpiece sensor 44 to detect whether the workpiece H is mounted on the feed dogs 8 in the workpiece mounting plate 4, and a control circuit 45 that is an applied voltage control section.

The purposes or functions of the transfer sensor 42 and the speed sensor 43 are carried out by a single rotation phase sensor 47 which is, as shown in Fig. 1, attached to a sewing machine spindle 46 drivingly rotatably supported within the arm section 2 in the sewing machine body 1, and which detects a rotation phase (a rotation angle of the spindle 46) of an intermittent transfer of the workpiece H by the feed dogs 8. Examples of the rotation phase sensor 47 include a photoelectric sensor and a proximity sensor using magnetism.

The photoelectric sensor is used as the workpiece sensor 44. The photoelectric sensor includes an optical transmitter receiver 48 attached to a lower end portion of the front end of the arm section 2, and a reflector 49 disposed in the vicinity of the feed dogs 8 and attached to the upper surface of the workpiece mounting plate 4, as shown in Figs. 1 and 2.

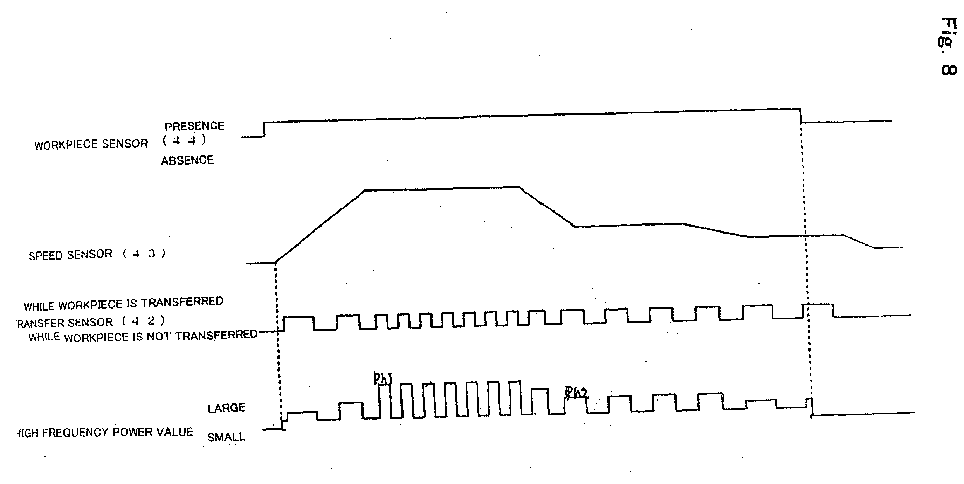

As shown in the timing chart of Fig. 8, the control circuit 45 outputs a control signal for causing the high frequency oscillator 40 to generate high frequency power when the workpiece sensor 44 detects the presence of the workpiece H mounted on the feed dogs 8. The control circuit 45 outputs a control signal for causing the high frequency oscillator 40 to stop the high frequency power generation when the workpiece sensor detects the absence of the workpiece H. Thus, the control circuit 45 controls the high frequency power generation and the stop thereof in the high frequency oscillator 40, depending on whether the workpiece H is mounted or not on the feed dogs 8.

Under the condition that the workpiece sensor 44 detects the workpiece H mounted on the feed dogs 8, when the pair of electrodes 12 and 16 are moved to approach each other, and the transfer sensor 42 detects that the workpiece H is not transferred by the feed dogs 8, the control circuit 45 outputs a control signal for causing the high frequency oscillator 40 to generate high frequency power P1 having a predetermined value, and the generated high frequency power P1 is applied between the pair of planar electrodes 12 and 16. When it is detected that the pair of electrodes 12 and 16 are moved away from each other, and the workpiece H is transferred by the feed dogs 8, the control circuit 45 outputs a control signal for causing the high frequency oscillator 40 to generate high frequency power P2 having a predetermined smaller value than while the workpiece is not transferred. Then, the generated high frequency power P2 is applied between the pair of planar electrodes 12 and 16. Thus, the control circuit 45 automatically controls the value of high frequency power applied between the pair of planar electrodes 12 and 16, depending on whether the workpiece H is transferred or not by the feed dogs 8.

Specifically, the value of the high frequency power P1 generated while the workpiece H is not transferred by the feed dogs 8, is a necessary and sufficient value at which the pair of electrodes 12 and 16 subjected to dielectric heating can melt a resin tape T to bond overlapped end portions of a fiber cloth W. The value of the high frequency power P2 generated while the workpiece H is transferred by the feed dogs 8 is not zero, and is somewhat smaller than the high frequency power P1 while the workplace H is not transferred. These two values are preset according to the heat resistance or the like of the fiber cloth W that is a bonding object.

Further, the control circuit 45 controls as follows. That is, when the transfer sensor 42 detects that the workpiece H is not transferred by the feed dogs 8, the value of the high frequency power P1 applied between the pair of planar electrodes 12 and 16 is increased, and the duration of the high frequency power P1 is shortened, as a workpiece transfer speed detected by the speed sensor 43 becomes higher.

In other words, the heating temperature of the pair of planar electrodes 12 and 16, which are subjected to dielectric heating by applying the high frequency power, are determined by the following expression:

$$\texttt{Value of high frequency power} \times \texttt{Duration}$$

Consequently, the control of the high frequency power P1 and the duration according to the workpiece transfer speed is to control so that the heating temperatures of the pair of planar electrodes 12 and 16 are held substantially constant irrespective of transfer speed variations. For example, it is set to satisfy the following relationship:

High frequency power value P1 during high transfer speed
$\times$ Duration t1 ≠ High frequency power value P2h during low transfer speed $\times$ Duration t2

In the present invention, the time "while the workpiece H is not transferred" includes not only the time while the transfer of the workpiece H by the feed dogs 8 is completed stopped, but also a period of time from the moment slightly before a complete stop or slightly after the complete stop, to the moment slightly before the transfer is started or slightly after the transfer is started. These moments are optionally adjustable by changing the setting of a detected phase (rotation angle) of the rotation phase sensor 47 to detect the rotation angle of the sewing machine spindle 46. On the other hand, the time "while the workpiece H is transferred" is automatically determined upon setting of the time while the workpiece H is not transferred.

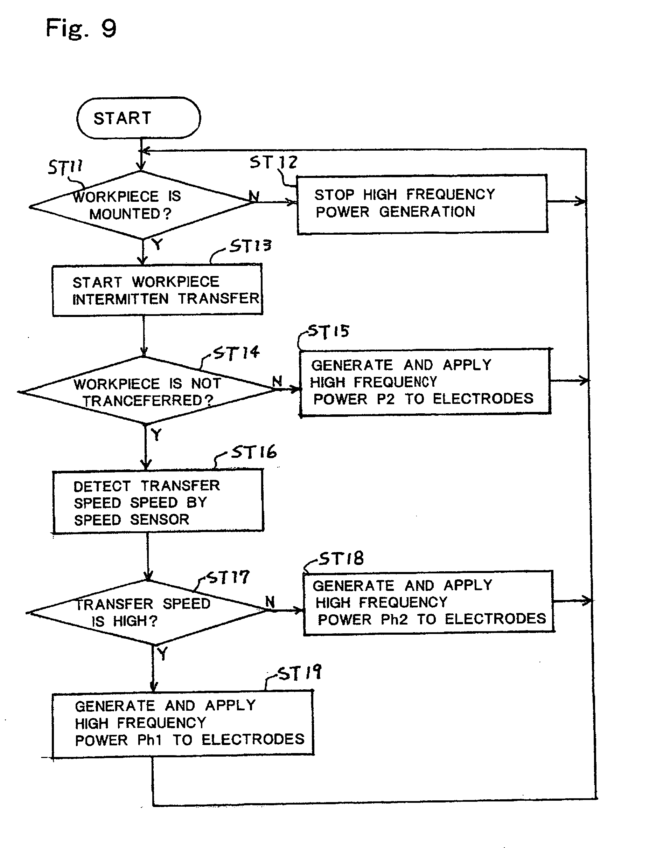

Next, the bonding operation in the high frequency sewing machine thus constructed is described by referring to the flow chart of Fig. 9.

Firstly, the workpiece H is prepared. As shown in Figs. 2 and 3, in the workpiece H, one end or the like of the fiber cloth W is turned back and overlapped vertically at a location on the nearside on the workpiece mounting plate 4, and a hot melt (for example, the trade name "DAN-FUSE" manufactured by NITTO BOSEKI CO., LTD.) T, which is a thermoplastic resin tape whose top and bottom surfaces are both formed as a bonding surface, is held between the overlapped end portions.

When the workpiece H thus prepared is mounted (set) on the upper surface of the workpiece mounting plate 4, the workpiece sensor 44 detects the presence or absence of the workpiece Hmounted on the feed dogs 8 (step ST11).

When the absence of the workpiece H on the feed dogs 8 is detected by the workpiece sensor 44 in step ST11, the control circuit 45 outputs the control signal for causing the high frequency oscillator 40 to stop high frequency power generation, so that the high frequency power generation by the high frequency oscillator 40 remains stopped (step ST12).

On the other hand, when the workpiece sensor 44 detects the presence of the workpiece H on the feed dogs 8, the sewing machine starts to operate. The synthetic movements of the feed dogs 8 (the front and rear feed dogs 8A and 8B of the feed dogs 8) cooperate with the vertical reciprocating movement of the presser foot 12 to start the intermittent transfer of the workpiece H in a predetermined progression direction X (step ST13).

During the intermittent transfer, the transfer sensor 42 of the rotation phase sensor 47 detects whether the workpiece H is transferred or not by the feed dogs 8 (step ST14).

When the transfer sensor 42 detects the transfer thereof in step ST14, the control circuit 45 outputs the control signal for causing the high frequency oscillator 40 to generate the high frequency power P2, and the high frequency oscillator 40 generates the high frequency power P2 having a smaller value than while the workpiece H is not transferred. The high frequency power P2 is applied between the pair of planar electrode 12 and 16 (step ST15).

On the other hand, during the intermittent transfer of the workpiece H by the feed dogs 8, the speed sensor 43 detects the transfer speed of the workpiece H (step ST16), and also determines whether the transfer speed is high or low (step ST17) .

If detected in step ST17 that the transfer speed is low, the control circuit 45 outputs the control signal for causing the high frequency oscillator 40 to generate the high frequency power Ph2. The high frequency oscillator 40 generates the high frequency power Ph2 whose value is higher than while the workpiece H is transferred, and is lower than when the transfer speed is high. Then, the high frequency power Ph2 is applied between the pair of planar electrodes 12 and 16 (step ST18).

If detected in step ST17 that the transfer speed is high, the control circuit 45 outputs the control signal for causing the high frequency oscillator 40 to generate the high frequency power Ph1. The high frequency oscillator 40 generates the high frequency power Ph1 whose value is further higher than when the transfer speed is low. Then, the high frequency power Ph1 is applied between the pair of planar electrodes 12 and 16 (step ST19).

Thus, the high frequency power Ph2 or Ph1 having the value corresponding to the transfer speed is applied to the pair of upper and lower planar electrodes 12 and 16 every time the workpiece transfer is discontinued. Under the dielectric heating of the high frequency power Ph2 or Ph1, the pair of planar electrodes 12 and 16 is heated to the predetermined temperature. As the result, the thermoplastic resin tape T held between the overlapped end portions of the fiber cloth W is melted in certain area units, and the overlapped end portions of the fiber cloth W are sequentially bonded together, and the same portion is repeatedly bonded together.

As described above, the workpiece H in a surface contact state in the certain area units is melted and bonded together. Therefore, even when relatively enhanced high frequency power is applied to the pair of electrodes 12 and 16, the heat of the enhanced high frequency power can be dispersed into the surface contact portions between the pair of electrodes 12 and 16, without being concentrated at linear or point contact portions. This eliminates occurrence of defective portions where the fiber cloth W has a burn or a burn hole due to heat concentration at a minute area portion. Consequently, owing to the absence of the defective portions due to the heat concentration, and the achievement of assured uniform bonding strength by applying the relatively enhanced high frequency power, a satisfactorily finished product is surely produced in a stable manner even when the workpiece H is the fiber cloth W that is weak against heat.

Additionally, the transfer means of the workpiece H is achieved by the cooperation between the feed dogs 8 which intermittently transfer the workpiece H along the horizontal surface of the upper surface of the workpiece mounting plate 4 in the progression direction X by the combination of horizontal movement and vertical movement, and the presser foot 12 which presses the workpiece H including the fiber cloth W, against the workpiece mounting plate 4 so that the workpiece H does not rise while it is transferred by the feed dogs 8. It is therefore easy to perform any optional curvilinear transfer besides linear transfer. Even when using the stretchable fiber cloth W, the fiber cloth W can be transferred as it is without being subjected to excess clamping force. Accordingly, the apparel products having many curvilinear portions and frequently using the stretchable fiber cloth can also be sufficiently handled, thereby surely and stably performing the predetermined bonding.

Further, when the transfer sensor 42 detects the transfer of the workpiece H, control is executed so as to apply the high frequency power whose value is smaller than the value of the high frequency power applied between the electrodes 12 and 16 while the workpiece H is not transferred, namely, the high frequency power value allowing the overlapped end portions of the fiber cloth W to be bonded together under dielectric heating. Therefore, small high frequency power is applied between the pair of electrodes 12 and 16 upon the transition from the time while the workpiece H is not transferred, to the time while the workpiece H is transferred. This sufficiently avoids the occasion that when the pair of electrodes 12 and 16 depart from each other, spark occurs therebetween, thus causing a defective portion where the fiber cloth W has burn or a burn hole. Furthermore, smaller high frequency power than while the workpiece H is not transferred is also applied while the workpiece H is transferred. This increases the first temperature rise rate under the dielectric heating of the pair of electrodes 12 and 16, immediately after the transition from the time while the workpiece H is transferred, to the time while the workpiece H is not transferred. This allows an operator to freely decrease the transfer speed when bonding a curvilinear portion or the like, thereby considerably facilitating the operation. Additionally, even when the transfer speed of the workpiece H is increased at a linear portion, the overlapped end portions of the fiber cloth W can be bonded together surely and firmly by quickly and surely melting the resin tape T. This permits highly efficient bonding without causing deterioration in yield.

As described in the foregoing embodiment, the presser foot 12 also serves as the upper planar electrode, thereby eliminating the need to install the upper electrode independently from the presser foot 12. As the result, the number of components can be decreased, and it is unnecessary to dispose the upper electrode at the location of the presser foot 12, and to carry out special structural devices for electrical insulating properties of the presser foot. This further simplifies the entire structure, and facilitates cost reduction.

As described in the foregoing embodiment, when the workpiece mounting plate 4 and the feed dogs 8 are composed of the material having excellent wear resistance, electrical insulating properties, and heat resistance, such as engineering plastics or super engineering plastics, it is capable of sufficiently ensuring the structural strength of the workpiece mounting plate 4 and the feed dogs 8. It is also capable of imparting excellent wear resistance, corrosion resistance, electrical insulating properties, and heat resistance to the workpiece mounting plate 4 and the feed dogs 8, thereby imparting enhanced durability to the workpiece mounting plate 4 and the feed dogs 8 used under conditions where the high frequency power is applied.

As described in the foregoing embodiment, when the preheating cartridge heaters 25 and 28 are annexed to the pair of planar electrodes 12 and 16, respectively, owing to the preheating, the upper and lower electrodes 12 and 16 can be held at high temperatures even while the workpiece H is transferred by the feed dogs 8. Therefore, the predetermined bonding strength can be stably obtained by surely melting the resin tape T all the time, while more surely preventing the occurrence of burn or the like due to excessive heating by minimizing the high frequency power applied to these two electrodes 12 and 16 while the workpiece H is not transferred.

Further, in the case where the presser foot 12 also serves as the upper planar electrode, between the presser foot 12 serving as the upper planar electrode, and the cartridge heater retainer 29 retaining the preheating cartridge heater 25 which preheats the presser foot 12 and is secured to the arm section 2, the heat conductive member 27 is interposed for connecting the presser foot 12 and the cartridge heater retainer 29 so that both can relatively slide up and down. This minimizes the weight increase of the presser foot (upper electrode) 12, thereby achieving smooth transfer of the workpiece H including the fiber cloth W, and also facilitating the curvilinear transfer operation against the weight of the presser foot 12. Furthermore, the heat of the preheating cartridge heater 25 can be efficiently transmitted to the presser foot 12 through the heat conductive member 27. The preheating effect of the electrode 12 avoids the occurrence of burn or the like, and ensures the stable bonding strength.

Although the foregoing embodiment illustrates the case where the presser foot 12 also serves as the upper planar electrode, the upper planar electrode may be installed independently from the presser foot 12. In this case, it is required that the presser foot 12 be made of a structural material, such as engineering plastics or super engineering plastics having excellent wear resistance, electrical insulating properties, and heat resistance.

Although in the foregoing embodiment the single rotation phase sensor 47 attached to the sewing machine spindle 46 also serves as the transfer sensor 42 and the speed sensor 43 for the workpiece H, the transfer sensor 42 and the speed sensor 43 may be installed independently.

Although the foregoing embodiment employs, as the preheating heater, the cartridge type one, without being limited thereto, an electric heater or the like may be fixedly built into.

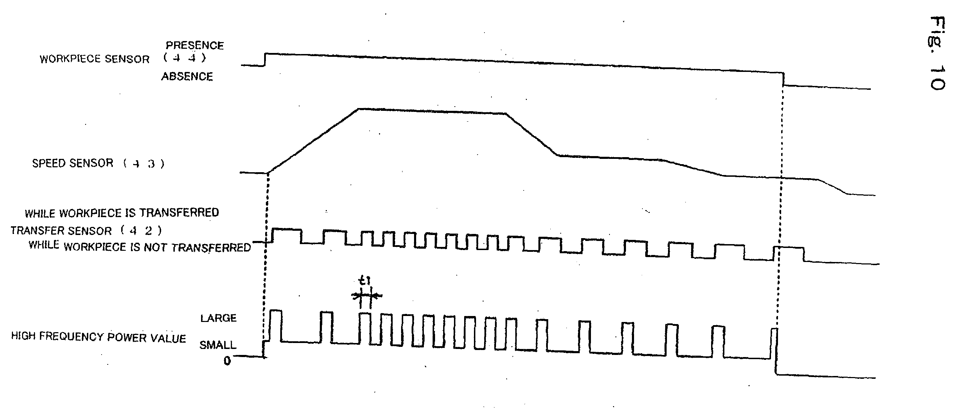

The foregoing embodiment illustrates the case of performing the following control, as shown in the timing chart of Fig. 8. That is, when the transfer sensor 42 detects that the workpiece H is not transferred by the feed dogs 8, the value of the high frequency power P1 applied between the pair of planar electrodes 12 and 16 is increased, and the duration of the high frequency power P1 is shortened, as the workpiece transfer speed detected by the speed sensor 43 becomes higher. The present invention is not limited thereto. For example, as shown in the timing chart of Fig. 10, control may be executed so that the high frequency power P1 having a certain value is normally applied for a certain time t1 while the workpiece is not transferred, irrespective of the workpiece transfer speed detected by the speed sensor 43.

Hereat, the certain high frequency power Ph1 applied while the workpiece H is not transferred, and the certain duration t1 are, of course, set to such values that a dielectric heating temperature with respect to the pair of electrodes 12 and 16 determined by the product of the two (Ph1xt1) reaches a necessary and sufficient temperature for bonding the overlapped end portions or the like of the fiber cloth W even at a maximum transfer speed.

As described above, under the setting intended for the control that the certain high frequency power Ph1 is normally applied for the certain time t1, irrespective of transfer speed variations, it is easy to adjust the high frequency power according to the type and heat resistance of the fiber cloth. In the foregoing exemplary embodiment, the value of the high frequency power applied to the pair of electrodes 12 and 16 while the workpiece H is transferred, is not zero, and is subjected to control so that it becomes smaller than the value of the high frequency power applied while the workpiece is not transferred. For example, under other control, the high frequency power value applied while the workpiece H is transferred may be changed to zero.

The features of all claims can be combined with each other as long as they do not contradict each other.

**Claims**

1. A high frequency sewing machine, including a workpiece mounting plate (4) slidingly movably mounting a workpiece (H) with a thermoplastic resin tape held between overlapped portions of a fiber cloth (W); an intermittent transfer device which is disposed below the workpiece mounting plate (4), and intermittently transfers the workpiece (H) mounted on the workpiece mounting plate (4) in a specific direction along a horizontal surface by a combination of horizontal movement and vertical movement; a presser foot (12) which cooperates with the intermittent transfer device to transfer the workpiece (H) in the specific direction, and presses the workpiece (H) so as to prevent a rise thereof; and an upper planar electrode disposed above the workpiece mounting plate (4), and a lower planar electrode (16) disposed below the workpiece mounting plate (4) and disposed flush with the upper surface of the workpiece mounting plate (4), wherein the overlapped portions of the fiber cloth (W) are continuously bonded together by allowing the thermoplastic resin tape to melt under high frequency dielectric heating by applying high frequency power between the pair of upper and lower planar electrodes (12, 16), **characterized by**

a transfer sensor (42) to detect whether a workpiece (H) is transferred or not by the intermittent transfer device; and
a high frequency power controller (45) to automatically control a high frequency power value (P1, P2) applied between the pair of planar electrodes, depending on whether the workpiece (H) is transferred or not by the intermittent transfer device, so that high frequency power (P1) having a predetermined value is applied between the pair of planar electrodes when the transfer sensor (42) detects that the workpiece (H) is not transferred, whereas high frequency power (P2) having a value smaller than while the workpiece (H) is not transferred, is applied between the pair of planar electrodes (12, 16) when the transfer sensor (42) detects that the workpiece (H) is transferred.

2. The high frequency sewing machine according to claim 1, wherein the high frequency power controller (45) controls so that the high frequency power applied between the pair of planar electrodes while the workpiece (H) is transferred, is changed to zero.

3. The high frequency sewing machine according to claim 1, wherein the intermittent transfer device comprises:

feed dogs (8) disposed in slot-like elongated holes (6) formed in the workpiece mounting plate (4); and
a feed dog drive mechanism that allows the feed dogs (8) to produce synthetic circulation movements in vertical and horizontal directions within the slot-like elongated holes.

4. The high frequency sewing machine according to claim 1, wherein the presser foot (12) also serves as the upper planar electrode of the pair of upper and lower planar electrodes (12, 16).

5. The high frequency sewing machine according to claim 1, wherein the workpiece mounting plate (4), and a part of the intermittent transfer device which abuts against the lower surface of the workpiece (H) are made of a material having electrical insulating properties and heat resistance, such as engineering plastics.

6. The high frequency sewing machine according to claim 1 or 4, wherein preheating heaters (25) are annexed to the pair of upper and lower planar electrodes (12, 16), respectively.

7. The high frequency sewing machine according to claim 1, further comprising:

a speed sensor (43) to detect a transfer speed of the workpiece (H) by the intermittent transfer device, wherein the high frequency power controller (45) executes controls to increase the value of high frequency power applied while the workpiece (H) is not transferred, as a workpiece (H) transfer speed detected by the speed sensor becomes higher.

8. The high frequency sewing machine according to claim 1, further comprising:

a speed sensor to detect a transfer speed of the workpiece (H) by the intermittent transfer device, wherein the high frequency power controller (45) executes control so as to apply, for a certain time, high frequency power having a certain value at which the overlapped portions of the fiber cloth (W) are bonded together at a maximum transfer speed while the workpiece (H) is not transferred, irrespective of a transfer speed detected by the speed sensor.

9. The high frequency sewing machine according to claim 7 or 8, wherein the transfer sensor (42) and the speed sensor are replaced with a rotation phase sensor (47) which is attached to a sewing machine spindle and detects a rotation phase of intermittent transfer of a workpiece (H) by the intermittent transfer device.

10. The high frequency sewing machine according to claim 7 or 8, further comprising:

a workpiece sensor (44) to detect the presence or absence of a workpiece (H) mounted on the intermittent transfer device, wherein
the high frequency power controller (45) executes control while the presence of the workpiece (H) is detected by the workpiece sensor (44), whereas it executes no control while the absence of the workpiece (H) is detected by the workpiece sensor (44).

11. The high frequency sewing machine according to claim 6, wherein, a heat conductive member (27) is interposed between the presser foot (12) also serving as the upper planar electrode, and a heater retainer (24) which retains the preheating heater for preheating the presser foot (12), and is fixedly attached to a sewing machine body (1), and the heat conductive member (27) connects the presser foot (12) and the heater retainer (24) so as to permit relative vertical sliding movement.

**Patentansprüche**

1.  Hochfrequenznähmaschine, enthaltend
    eine Werkstückbefestigungsplatte (4), die ein Werkstück (H) mit einem thermoplastischen Harzband welches zwischen überlappenden Abschnitten eines Fasergewebes (W) gehalten wird, gleitend beweglich befestigt;
    eine intermittierende Transfervorrichtung, die unter der Werkstückbefestigungsplatte (4) angeordnet ist und ein auf der Werkstückbefestigungsplatte (4) befestigtes Werkstück (H), durch eine Kombination aus horizontaler Bewegung und vertikaler Bewegung, in eine bestimmte Richtung entlang einer horizontalen Oberfläche intermittierend transferiert;
    einen Druckfuß (12), welcher mit der intermittierenden Transfervorrichtung zusammenwirkt um das Werkstück (H) in die bestimmte Richtung zu transferieren und das Werkstück (H) andrückt um das Anheben desselben zu vermeiden; und
    eine obere planare Elektrode, die über der Werkstückbefestigungsplatte (4) angeordnet ist und eine untere planare Elektrode (16), die unter der Werkstückbefestigungsplatte (4) und bündig mit der oberen Oberfläche der Werkstückbefestigungsplatte (4) angeordnet ist, wobei
    die überlappenden Abschnitte des Fasergewebes (W) kontinuierlich miteinander verbunden werden, indem für das thermoplastische Harzband zugelassen wird, dass es unter hochfrequenter dielektrischer Erwärmung durch Anlegen von hochfrequentem Strom zwischen dem Paar von unterer und oberer Elektrode (12, 16) schmilzt, **gekennzeichnet durch**
    einen Transfersensor (42) der detektiert, ob ein Werkstück (H) **durch** die intermittierende Transfervorrichtung transferiert wird oder nicht; und
    einen Hochfrequenzstromregler (45) zur automatischen Regelung eines zwischen dem planaren Elektrodenpaar angelegten Hochfrequenzstromwertes (P1, P2), in Abhängigkeit davon, ob das Werkstück (H) **durch** die intermittierende Transfervorrichtung transferiert wird oder nicht, sodass der Hochfrequenzstrom (P1), der einen vorbestimmten Wert aufweist, zwischen dem planaren Elektrodenpaar angelegt wird, wenn der Transfersensor (42) detektiert, dass das Werkstück (H) nicht transferiert wird, wohingegen der Hochfrequenzstrom (P2), der einen kleineren Wert aufweist als der wenn das Werkstück (H) nicht transferiert wird, zwischen dem planaren Elektrodenpaar (12, 16) angelegt wird, wenn der Transfersensor (42) detektiert, dass das Werkstück (H) transferiert wird.

2.  Hochfrequenznähmaschine gemäß Anspruch 1, wobei der Hochfrequenzstromregler (45) so regelt, dass der zwischen dem planaren Elektrodenpaar angelegte Hochfrequenzstrom auf Null geändert wird, während das Werkstück (H) transferiert wird.

3.  Hochfrequenznähmaschine gemäß Anspruch 1, wobei die intermittierende Transfervorrichtung aufweist:

    Stoffschieber (8), die in, in der Werkstückbefestigungsplatte (4) gebildeten, schlitzähnlich länglichen Öffnungen (6) angeordnet sind; und
    einen Antriebsmechanismus für die Stoffschieber der es den Stoffschiebern (8) ermöglicht, innerhalb der schlitzähnlich länglichen Öffnungen, künstliche Zirkulationsbewegungen in vertikalen und horizontalen Richtungen zu erzeugen.

4.  Hochfrequenznähmaschine gemäß Anspruch 1, wobei der Druckfuß (12) gleichzeitig als die obere planare Elektrode des Paares von oberer und unterer planarer Elektrode (12, 16) dient.

5.  Hochfrequenznähmaschine gemäß Anspruch 1, wobei die Werkstückbefestigungsplatte (4) und ein Teil der intermittierenden Transfervorrichtung, welcher sich im Anschlag mit der unteren Oberfläche des Werkstückes (H) befindet, aus einem Material gefertigt sind, welches elektrisch isolierende Eigenschaften und Hitzebeständigkeit aufweist, wie zum Bespiel technische Kunststoffe.

6.  Hochfrequenznähmaschine gemäß Anspruch 1 oder 4, wobei Vorwärmheizer (25) an das Paar von oberer bzw. unterer planarer Elektrode (12, 16) angefügt sind.

7.  Hochfrequenznähmaschine gemäß Anspruch 1, ferner aufweisend:

einen Geschwindigkeitssensor (43) zur Detektion einer, durch die intermittierende Transfervorrichtung bewirkten, Transfergeschwindigkeit des Werkstückes (H), wobei
der Hochfrequenzstromregler (45) Regelungen ausführt um den Wert des angelegten Hochfrequenzstromes, während das Werkstück (H) nicht transferiert wird, zu erhöhen, sobald sich eine durch den Geschwindigkeitssensor detektierte Transfergeschwindigkeit des Werkstückes (H) erhöht.

**8.** Hochfrequenznähmaschine gemäß Anspruch 1, weiter aufweisend:

einen Geschwindigkeitssensor (43) zur Detektion einer, durch die intermittierende Transfervorrichtung bewirkten, Transfergeschwindigkeit des Werkstückes (H), wobei
der Hochfrequenzstromregler (45) Regelungen ausführt um für eine bestimmte Zeit einen Hochfrequenzstrom mit einem bestimmten Wert anzulegen, bei dem die überlappenden Abschnitte des Fasergewebes (W) bei einer maximalen Transfergeschwindigkeit miteinander verbunden werden, während das Werkstück (H) nicht transferiert wird, unabhängig von der Transfergeschwindigkeit die der Geschwindigkeitssensor detektiert.

**9.** Hochfrequenznähmaschine gemäß Anspruch 7 oder 8, wobei der Transfersensor (42) und der Geschwindigkeitssensor durch einen Rotationsphasensensor (47) ersetzt sind, welcher mit der Nähmaschinenspindel verbunden ist und eine, durch die intermittierende Transfervorrichtung bewirkte, Rotationsphase des intermittierenden Transfer eines Werkstückes (H) detektiert.

**10.** Hochfrequenznähmaschine gemäß Anspruch 7 oder 8, weiter aufweisend:

einen Werkstücksensor (44) zur Detektion der Anwesenheit oder Abwesenheit eines auf der intermittierenden Transfervorrichtung befestigten Werkstückes (H), wobei
der Hochfrequenzstromregler (45) Regelungen ausführt während die Anwesenheit des Werkstückes (H) durch der Werkstücksensor (44) detektiert wird, wohingegen er keine Regelungen durchführt während die Abwesenheit des Werkstückes (H) durch den Werkstücksensor (44) detektiert wird.

**11.** Hochfrequenznähmaschine gemäß Anspruch 6, wobei
eine Wärmeleitungsteil (27) zwischen dem Druckfuß (12), der auch als die obere planare Elektrode dient, und einer Heizeraufnahme (24) welche, die Vorwärmheizer zum Vorwärmen des Druckfußes (12) aufnimmt, eingeschoben und fest mit einem Nähmaschinenkörper (1) verbunden ist, wobei das Wärmeleitungsteil (27) den Druckfuß (12) und die Heizeraufnahme (24) verbindet und so eine relative vertikale Gleitbewegung erlaubt.

**Revendications**

**1.** Machine à coudre haute fréquence, incluant une plaque support de pièce de travail (4) supportant de manière coulissante de façon mobile une pièce de travail (H), une bande de résine thermoplastique étant maintenue entre des parties chevauchées d'un tissu de fibres (W) ; un dispositif de transfert intermittent qui est disposé au-dessous de la plaque support de pièce de travail (4), et qui transfère par intermittence la pièce de travail (H) montée sur la plaque de montage de pièce de travail (4) dans un sens spécifique le long d'une surface horizontale par une combinaison de mouvement horizontal et de mouvement vertical ; un pied presseur (12) qui coopère avec le dispositif de transfert intermittent pour transférer la pièce de travail (H) dans le sens spécifique, et qui presse la pièce de travail (H) afin de l'empêcher de se soulever ; et une électrode plane supérieure disposée au-dessus de la plaque de montage de pièce de travail (4), et une électrode plane inférieure (16) disposée au-dessous de la plaque support de pièce de travail (4) et disposée à fleur avec la surface supérieure de la plaque de montage de pièce de travail (4), dans laquelle les parties chevauchées du tissu de fibres (W) sont liées ensemble de façon continue en permettant à la bande de résine thermoplastique de fondre sous un chauffage diélectrique haute fréquence en appliquant un courant haute fréquence entre le couple d'électrodes planes supérieure et inférieure (12, 16), **caractérisée par**
un capteur de transfert (42) pour détecter si une pièce de travail (H) est ou non transférée par le dispositif de transfert intermittent ; et
une unité de commande de courant haute fréquence (45) pour automatiquement commander une valeur de courant haute fréquence (P1, P2) appliqué entre le couple d'électrodes planes, en fonction du fait que la pièce de travail (H) est ou non transférée par le dispositif de transfert intermittent, de sorte qu'un courant haute fréquence (P1) ayant une valeur prédéterminée est appliqué entre le couple d'électrodes planes lorsque le capteur de transfert (42) détecte que la pièce de travail (H) n'est pas transférée, tandis qu'un courant haute fréquence (P2) ayant une valeur plus petite que lorsque la pièce de travail (H) n'est pas transférée, est appliqué entre le couple d'électrodes planes (12, 16) lorsque le capteur de transfert (42) détecte que la pièce de travail (H) est transférée.

2. Machine à coudre haute fréquence selon la revendication 1, dans laquelle l'unité de commande de courant haute fréquence (45) effectue une commande de sorte que le courant haute fréquence appliqué entre le couple d'électrodes planes pendant que la pièce de travail (H) est transférée, est changé à zéro.

3. Machine à coudre haute fréquence selon la revendication 1, dans laquelle le dispositif de transfert intermittent comprend :

   des griffes d'entraînement (8) disposées dans des trous allongés semblables à des fentes (6) formées dans la plaque de montage de pièce de travail (4) ; et
   un mécanisme de pilotage de griffe d'entraînement qui permet aux griffes d'entraînement (8) de produire des mouvements de circulation artificielle dans des directions verticale et horizontale à l'intérieur des trous allongés semblables à des fentes.

4. Machine à coudre haute fréquence selon la revendication 1, dans laquelle le pied presseur (12) sert également d'électrode plane supérieure du couple d'électrodes planes supérieure et inférieure (12, 16).

5. Machine à coudre haute fréquence selon la revendication 1, dans laquelle la plaque de montage de pièce de travail (4) et une partie du dispositif de transfert intermittent qui est contiguë à la surface inférieure de la pièce de travail (H), sont faites d'une matière ayant des propriétés d'isolation électrique et de résistance à la chaleur, comme des plastiques techniques.

6. Machine à coudre haute fréquence selon la revendication 1 ou 4, dans laquelle des dispositifs de préchauffage (25) sont respectivement annexés au couple d'électrodes planes supérieure et inférieure (12, 16).

7. Machine à coudre haute fréquence selon la revendication 1, comprenant en outre :

   un capteur de vitesse (43) pour détecter une vitesse de transfert de la pièce de travail (H) par le dispositif de transfert intermittent, dans laquelle
   l'unité de commande de courant haute fréquence (45) exécute des commandes pour augmenter la valeur de courant haute fréquence appliqué tandis que la pièce de travail (H) n'est pas transférée, lorsqu'une vitesse de transfert de pièce de travail (H) détectée par le capteur de vitesse devient plus élevée.

8. Machine à coudre haute fréquence selon la revendication 1, comprenant en outre :

   un capteur de vitesse pour détecter une vitesse de transfert de la pièce de travail (H) par le dispositif de transfert intermittent, dans laquelle
   l'unité de commande de courant haute fréquence (45) exécute une commande de façon à appliquer, pendant un certain temps, un courant haute fréquence ayant une certaine valeur à laquelle les parties chevauchées du tissu de fibres (W) sont liées ensemble à une vitesse de transfert maximale tandis que la pièce de travail (H) n'est pas transférée, sans tenir compte d'une vitesse de transfert détectée par le capteur de vitesse.

9. Machine à coudre haute fréquence selon la revendication 7 ou 8, dans laquelle le capteur de transfert (42) et le capteur de vitesse sont remplacés par un capteur de phase de rotation (47) qui est attaché à une broche de machine à coudre et qui détecte une phase de rotation de transfert intermittent d'une pièce de travail (H) par le dispositif de transfert intermittent.

10. Machine à coudre haute fréquence selon la revendication 7 ou 8, comprenant en outre :

   un capteur de pièce de travail (44) pour détecter la présence ou l'absence d'une pièce de travail (H) montée sur le dispositif de transfert intermittent, dans lequel
   l'unité de commande de courant haute fréquence (45) exécute une commande tandis que la présence de la pièce de travail (H) est détectée par le capteur de pièce de travail (44), alors qu'il n'exécute aucune commande tandis que l'absence de la pièce de travail (H) est détectée par le capteur de pièce de travail (44).

11. Machine à coudre haute fréquence selon la revendication 6, dans laquelle un élément conducteur de chaleur (27) est interposé entre le pied presseur (12) servant également d'électrode plane supérieure et un dispositif de retenue de dispositif de chauffage (24) qui retient le dispositif de préchauffage pour préchauffer le pied presseur (12), et est fermement attaché à un corps de machine à coudre (1), et l'élément conducteur de chaleur (27) relie le pied presseur (12) et le dispositif de retenue de dispositif de chauffage (24) afin de permettre un mouvement de coulissement vertical relatif.

EP 2 364 607 B1

Fig. 1

Fig. 2

Fig. 3

EP 2 364 607 B1

Fig. 4

Fig. 5

## Fig. 6

## Fig. 7

## Fig. 8

Fig. 9

START

ST11
WORKPIECE IS
MOUNTED? —N→ ST12 STOP HIGH FREQUENCY
POWER GENERATION

Y

ST13
START WORKPIECE
INTERMITTEN TRANSFER

ST14
WORKPIECE IS NOT
TRANCEFERRED? —N→ ST15 GENERATE AND APPLY
HIGH FREQUENCY
POWER P2 TO ELECTRODES

Y

ST16
DETECT TRANSFER
SPEED SPEED BY
SPEED SENSOR

ST17
TRANSFER SPEED
IS HIGH? —N→ ST18 GENERATE AND APPLY
HIGH FREQUENCY
POWER Ph2 TO ELECTRODES

Y

ST19
GENERATE AND APPLY
HIGH FREQUENCY
POWER Ph1 TO ELECTRODES

24

Fig. 10

EP 2 364 607 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6218819 A
- JP 6155576 A
- JP 4022539 B
- WO 4022539 A